# EUROPEAN PATENT SPECIFICATION

(11) **EP 3 842 940 B1**
(45) Date of publication and mention of the grant of the patent: **13.08.2025**
(21) Application number: 19852643.6
(22) Date of filing: 20.08.2019
(51) Int. Cl.: G06F 9/451, G06F 16/28, G06N 20/00

(54) **METHOD AND SYSTEM FOR UNIFORMLY PERFORMING FEATURE EXTRACTION**
VERFAHREN UND SYSTEM ZUR GLEICHMÄSSIGEN MERKMALSEXTRAKTION
PROCÉDÉ ET SYSTÈME PERMETTANT UNE RÉALISATION UNIFORME D'UNE EXTRACTION DE CARACTÉRISTIQUES

(30) Priority: 21.08.2018 CN 201810954494
(43) Date of publication of application: 30.06.2021
(73) Proprietor: The Fourth Paradigm (Beijing) Tech Co Ltd, Beijing 100085 (CN)
(72) Inventor: HUANG, Yajian, Beijing 100085 (CN); WANG, Taize, Beijing 100085 (CN); DENG, Long, Beijing 100085 (CN); FAN, Xiaoliang, Beijing 100085 (CN); LIU, Chenlu, Beijing 100085 (CN); LIU, Yongchao, Beijing 100085 (CN); SUN, Di, Beijing 100085 (CN)
(74) Representative: Hannke Bittner & Partner mbB Regensburg
(86) International application number: PCT/CN2019/101649
(87) International publication number: WO 2020/038376

(56) References cited:
- CN-A- 104 586 402
- CN-A- 105 677 353
- CN-A- 105 677 353
- CN-A- 106 779 088
- CN-A- 109 144 648
- US-A1- 2010 175 049
- US-A1- 2015 379 427
- US-A1- 2018 101 529
- BHUYAN FAHIMA AMIN ET AL: "Scalable Provenance Storage and Querying Using Pig Latin for Big Data Workflows", 2017 IEEE INTERNATIONAL CONFERENCE ON SERVICES COMPUTING (SCC), IEEE, 25 June 2017 (2017-06-25), pages 459 - 466, XP033153539, DOI: 10.1109/SCC.2017.65

## Description

### TECHNICAL FIELD

The present disclosure generally relates to the field of data processing, in particular to a method and a system for uniform execution of feature extraction.

### BACKGROUND

With the emergence of "big data", people are inclined to exploit value from data by employing a machine learning technique. Machine learning is an inevitable product as artificial intelligence research is developed to a certain stage and is committed to improving the performance of a system itself empirically by means of calculation. In a computer system, "experience" often exists in form of "data". A "model" can be generated from data by means of a machine learning algorithm, i.e., provision of empirical data to the machine learning algorithm can generate the model based on these empirical data. In the face of new circumstances, corresponding prediction results are obtained by means of trained models. No matter whether in a stage of training the machine learning model or in a stage of estimating with the machine learning model, is necessary to perform feature extraction on data to obtain machine learning samples including various features.

A current machine learning platform or system primarily realizes a function of training a machine learning model, i.e., the platform or system performs processes of operations such as feature extraction, model building and model tuning by means of collected large-scale data. What is emphasized in this stage is not the response speed but the throughput capacity, i.e., data size processed within a unit time. If it is necessary to use a trained machine learning model to estimate, it is usually focused on the response speed rather than the throughput capacity, which urges technicians to perform additional development for the estimating stage, especially for a feature extraction process, leading to a higher estimating cost.

US2010175049 A1 discloses systems, methods and computer storage media for providing Structured Computations Optimized for Parallel Execution (SCOPE) that facilitate analysis of a large-scale dataset utilizing row data of those data sets. SCOPE includes, among other features, an extract command for extracting data bytes from a data stream and structuring the data bytes as data rows having strictly defined columns. SCOPE also includes a process command and a reduce command that identify data rows as inputs. The reduce command also identifies a reduce key that facilitates the reduction based on the reduce key. SCOPE additionally includes a combine command that identifies two data row sets that are to be combined based on an identified joint condition. Additionally, SCOPE includes a select command that leverages SQL and C# languages to create an expressive script that is capable of analyzing large-scale data sets in a parallel computing environment.

US2018101529 A1 discloses systems and methods for interacting with, controlling, and/or otherwise managing statistical, machine learning, data mining, and/or other predictive methods to produce algorithms for intelligent systems. Various embodiments allow for management of diverse, distributed predictive algorithms via user interfaces and APIs that enable access to configuration, optimization, and/or other activities related to managing computational models in training, production, and/or archival processes. Further embodiments disclosed herein allow for the tracking and/or improvement of models over time.

BHUYAN FAHIMA AMIN ET AL: "Scalable Provenance Storage and Querying Using Pig Latin for Big Data Workflflows", 2017 IEEE INTERNATIONAL CONFERENCE ON SERVICES COMPUTING (SCC), IEEE, 25 June 2017 (2017-06-25), pages 459-466, DOI 10.1109/SCC.2017.65) leverages Pig Latin, a high-level platform for creating programs that run on Apache Hadoop, and OPQL, a graph-level provenance query language, to build a scalable provenance storage and querying system for big data workflows. Our main contributions are: i) we propose algorithms to translate OPQL constructs to equivalent Pig Latin programs; ii) we extend OPQL, to support the W3C PROV-DM standard provenance model; iii) we develop and evaluate our system on provenance datasets from the UTPB benchmark; and (iv) we create some visual OPQL constructs in the DATAVIEW big data workflow system to facilitate the easy creation of complex OPQL queries in a visual workflow style. Our preliminary experimental study shows the feasibility of our framework for big-data scale provenance storage and querying.

CN105677353 A discloses a feature extraction method and a machine learning method and a device thereof, which can be used online and offline.

### SUMMARY

An exemplary embodiment of the disclosure provides a method and a system for uniform execution of feature extraction, and the method and system can be used for uniform execution of feature extraction in various feature extraction scenes. The invention is defined by the appended claims.

According to the exemplary embodiment of the disclosure, a method for uniform execution of feature extraction is provided, according to claim 1.

According to another exemplary embodiment of the disclosure, a system according to claim 13 is provided.

According to another exemplary embodiment of the disclosure, a computer readable storage medium that stores the command is provided, wherein the command enables the at least one calculating device to execute the method for uniform execution of feature extraction when being operated by the at least one calculating device, according to claim 14.

The method and system for uniform execution of feature extraction according to the exemplary embodiment of the disclosure can be used for uniform execution of feature extraction in various feature extraction scenes. As an example, on the one hand, the method and system can be compatible with an online feature extraction scene and an offline feature extraction scene to achieve seamless joint of the online feature extraction scene and the offline feature extraction scene, so that it is unnecessary to develop specific operating modes in the online feature extraction scene and the offline feature extraction scene separately for the same feature extraction script, and therefore, the workload of development staff is reduced; and on the other hand, the method and system can be used for feature extraction efficiently by way of a high throughput in the offline feature extraction scene, and moreover, the method and system can be used for feature extraction with high real-time and low time delay in the online feature extraction scene. In addition, the method and system can be compatible with both time-sequence feature extraction and non-time-sequence feature extraction.

Further aspects and/or advantages of general plotting of the disclosure will be illustrated partially in the following description. A further part is apparent from the description or can be learned through embodiments of the general idea of the disclosure.

### BRIEF DESCRIPTION OF THE DRAWINGS

Description will be made below in combination with drawings exemplarily illustrating the embodiments, and the above and other purposes and characteristics of the exemplary embodiments of the disclosure will become more apparent. In the drawings,
Fig. 1 illustrates a flow diagram of the method for uniform execution of feature extraction according to the exemplary embodiment of the disclosure;
Fig. 2 illustrates an example of execution plan according to the exemplary embodiment of the disclosure;
Fig. 3 illustrates a flow diagram of the method for uniform execution of feature extraction according to another exemplary embodiment of the disclosure; and
Fig. 4 illustrates a block diagram of the system for uniform execution of feature extraction according to the exemplary embodiment of the disclosure.

### DETAILED DESCRIPTION

Detailed reference will be now made to the embodiments of the disclosure and examples of the embodiments are illustrated in the drawings, wherein same labels refer to same parts consistently. Description of the embodiments will be made with reference to the drawings below for the convenience of explaining the disclosure. It should be noted that both "and/or" and "additionally/alternatively" in the disclosure represent three parallel cases. For example, "including A and/or B" represents including at least one of A and B, i.e., including the following three parallel conditions: (1) including A; (2) including B; and (3) including both A and B. Similarly, "including A, B and/or C" represents including at least one of A, B and C. In another example, "executing step 1 and/or step 2" represents executing at least one of step 1 and step 2, i.e., represents the following three parallel cases: (1) executing step 1; (2) executing step 2; and (3) executing both step 1 and step 2.

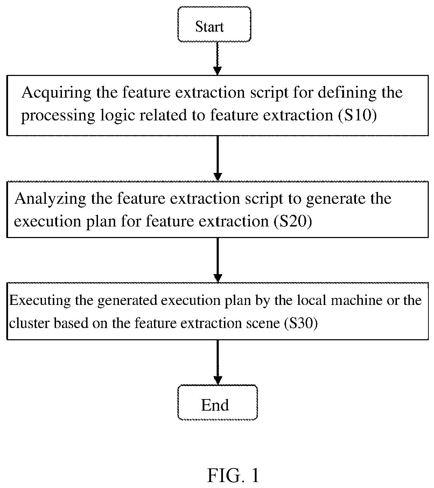

Fig. 1 illustrates the flow diagram of the method for uniform execution of feature extraction according to the exemplary embodiment of the disclosure. As an example herein, the method can be executed by either a computer program or an aggregation of dedicated hardware equipment or software and hardware resources for executing machine learning, big data calculation or data analysis. For example, the method can be executed by a machine learning platform for implementing machine learning related businesses.

With reference to the Fig. 1, in the step S10, a feature extraction script for defining a processing logic related to feature extraction is acquired.

The processing logic related to feature extraction herein can include any processing logic related to feature extraction. As an example, the processing logic related to feature extraction can include a processing logic that acquires features from a data table. The data table herein can be either an original data table or a data table acquired by processing the original data table (for example, splicing a plurality of original data tables).

As an example, when the data table is the data table that is acquired by splicing the plurality of original data tables, the processing logic related to feature extraction can further include a processing logic for splicing the data tables. As a preferred example, the processing logic for splicing the data tables can include a processing logic for splicing the data tables for source fields of features. The processing logic for splicing the data tables for original fields of features herein is a processing logic for only splicing the source fields of features in the to-be-spliced data tables to form a new data table.

Each data record in the data table herein can be regarded as description with respect to one event or object, corresponding to one example or sample. In the data record, attribute information reflecting representation or property of the event or object in a certain aspect is included, namely, the field. For example, one row of the data table corresponds to one data record and one column of the data table corresponds to one field.

As an example, the processing logic related to feature extraction can relate to feature extraction in one or more time windows. The time windows herein can be used for screening one or more data records needed to depend when features are generated, wherein the time windows can be used for generating non-time-sequence features when being set to only include one data record and can be used for generating time-sequence features when being set to include more data records. It should be understood that the processing logic related to feature extraction can relate to extraction of one or more features in each time window. As an example, when the processing logic related to feature extraction relates to feature extraction in more time windows, the processing logic related to feature extraction can further include a processing logic for summarizing the features.

As an example, the time window is defined by at least one of a source data table, a segmentation reference field, a time reference field, a time span and a window size. Specifically, the source data table of the time window is the data table, wherein feature extraction is based on the data table in the time window. A segmentation reference field of the time window is a field (for example, a user ID), wherein the data records in the source data table are grouped (i.e., fragmented) based on the field. A time reference field of the time window is a field (for example, a user card-swiping time), wherein each group of the data records is sequenced based on the field. The time span of the time window is a time range (for example, a week) corresponding to the time reference field of the data record in the time window, the window size of the time window is quantity of data in the time window, and the window size is an integer that is greater than 0.It should be understood that either one of the time span and the window size or both the time span and the window size can be set in defining the time window.

As an example, when the processing logic related to feature extraction relates to feature extraction in more time windows, the more time windows are different one another, i.e., at least one of the following items among the more time windows is different: source data table, segmentation reference field, time reference field, time span and window size.

As an example, the processing logic related to feature extraction can relate to: non-time-sequence feature extraction in the time window with the window size being 1, and/or time-sequence feature extraction in the time window with the window size not being 1.

With respect to time-sequence feature extraction, it is necessary to perform time-sequence feature extraction generally in processing time-sequence data. The time- sequence data is of very high sequentiality and previous and later data are generally in dependent, periodical relationships and the like. For example, transaction data can present time-varying strong correlation, and thus, a statistical result of the transaction data can be regarded as a feature of the sample. Therefore, features (for example, recent transaction habits (such as amount) and the like) that reflect time-sequence behaviors can be generated based on the time windows. It is generally necessary to appoint dimensionality (i.e., the segmentation reference fields of the time windows) of the time-sequence data, for example, whether related features (for example, time-sequence statistical features related to transaction amount) are extracted according to a natural person (for example, the user ID) or related features are extracted according to a card number with transactions. In addition, it is further necessary to appoint a range (i.e., the time spans and/or the window sizes of the time windows) of historical data related to the time-sequence features, for example, the transaction amount with the latest week and the like. The time windows corresponding to extraction of the time features can specify all data records (including current data records and/or historical data records), wherein current to-be-extracted features are dependent on the data records, so that the current to-be-extracted features can be calculated based on related field values in these data records.

According to the exemplary embodiments of the disclosure, non-time-sequence feature extraction in the time window with the window size being 1 can be considered, so that extraction of both time-sequence features and non-time-sequence features can be compatible by means of uniform time window setting. However, in the exemplary embodiments of the present disclosure, it should be understood that non-time-sequence feature extraction may be performed without being in the time window.

As an example, when the processing logic related to feature extraction only relates to non-time-sequence feature extraction, it is possible that the processing logic related to feature extraction is not involved with any time window, i.e., it is unnecessary to provide any time window for extracting features.

As an example, when the processing logic related to feature extraction relates to both non-time-sequence feature extraction and time-sequence feature extraction, the processing logic related to feature extraction may involve: non-time-sequence feature extraction in the time window with the window size being 1, and time-sequence feature extraction in the time window with the window size not being 1.

As an example, a feature extraction script for defining the processing logic related to feature extraction can be acquired directly and externally. As another example, the feature extraction script can be acquired based on a code for defining the processing logic related to feature extraction, which is input by a user through an input box, and/or based on a configuration item, for defining the processing logic related to feature extraction, which is configured by a user. For example, the method can be executed by the machine learning platform for executing a machine learning process, and the machine learning platform can respond to a user operation to provide a graphical interface (for example, an interface for configuring feature engineering) for configuring a feature extraction process, wherein the graphical interface can include an input control for inputting the processing logic related to feature extraction, and then can receive an input operation of the user of executing the input control on the graphical interface and acquire the feature extraction script for defining the processing logic related to feature extraction according to the input operation. As an example, the input control can include a content input box for inputting the code and/or the configuration item for defining the processing logic related to feature extraction and/or a selection control for performing a selecting operation among candidate configuration items with respect to the processing logic related to feature extraction.

In the step S20, the acquired feature extraction script is analyzed to generate the execution plan for feature extraction.

As an example, the processing logic defined by the feature extraction script can be segmented according to a processing sequence to generate the execution plan for feature extraction. As it is necessary to execute the feature extraction process according to a certain processing sequence, for example, processing such as splicing the data tables, acquiring features from the data tables and summarizing the generated features is required in the feature extraction process, the processing logic defined by the acquired feature extraction script can be segmented according to the processing sequence of the feature extraction process, for example, the processing logic defined by the acquired feature extraction script can be segmented into a processing logic part for splicing the data tables, a processing logic part for acquiring features from the data tables and a processing logic part for summarizing the generated features. Then, the executing plan for feature extraction can be generated based on each the segmented processing logic part.

As an example, corresponding processing logic can be segmented according to the processing sequence to generate the execution plan for feature extraction for each time window when the acquired processing logic defined by the feature extraction script relates to feature extraction in at least one time window. That is, the processing logics corresponding to different time windows are not segmented into the same processing logic part. For example, corresponding processing logic corresponding to the time window can be segmented according to the processing sequence of the feature extraction process for each time window when the acquired processing logic defined by the feature extraction script relates to feature extraction in the more time windows. For example, the acquired processing logic defined by the acquired feature extraction script can be segmented into the processing logic part for splicing the data tables for each time window, the processing logic part for acquiring features from the data tables and the processing logic part for summarizing the generated features generated by all the time windows. Then, the executing plan for feature extraction can be generated based on each the segmented processing logic part.

As an example, the generated executing plan for feature extraction can be a directed acyclic graph constituted by nodes, wherein the nodes correspond to the segmented processing logics. As an example, the nodes include calculation nodes corresponding to the processing logics for acquiring features from the data tables. Further, the nodes can further include table splicing nodes corresponding to the processing logics for splicing the data tables, and/or feature splicing nodes corresponding to the processing logics for summarizing the features. As an example, the processing logics for acquiring the features from the data tables for different time windows can correspond to different calculation nodes, and the processing logics for splicing different data tables can correspond to different table splicing nodes. It should be understood that a connecting relationship with the nodes corresponding to each segmented processing logic part can be determined based on a relationship between an input variable and/or an output variable of each segmented processing logic part.

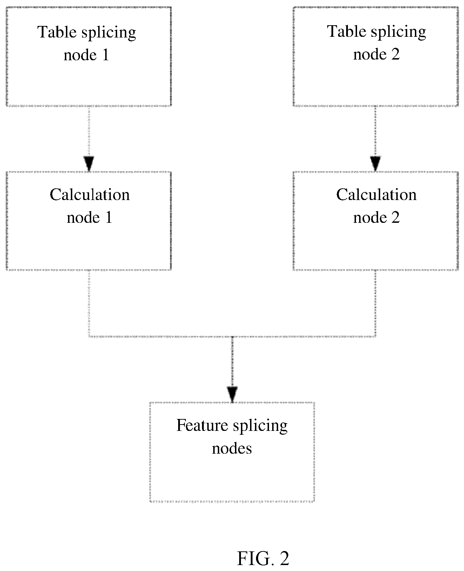

Fig. 2 illustrates an example of execution plan according to the exemplary embodiment of the disclosure. As shown in the Fig. 2, the processing logic defined by the acquired feature extraction script can be segmented according to the processing sequence of the feature extraction process as follows: the processing logic part for splicing the data tables for the time window 1 (for example, the processing logic part for splicing the data table 1 and the data table 2 to acquire a source data table of the time window 1), the processing logic part for acquiring the features (executing feature extraction) from the data tables for the time window 1, the processing logic part for splicing the data tables for the time window 2 (for example, the processing logic part for splicing the data table 1 and the data table 3 to acquire the source data table of the time window 2), the processing logic part for acquiring the features from the data tables for the time window 2 and the processing logic part for summarizing the features acquired based on the time window 1 and the features acquired based on the time window 2.Then, the directed acyclic graph formed by the nodes shown in the Fig. 2 can be generated based on each segmented processing logic part (i.e. the execution plan for feature extraction), wherein the table splicing node 1 corresponds to the processing logic part for splicing the data tables for the time window 1, the calculating node 1 corresponds to the processing logic part for acquiring the features from the data tables for the time window 1, the table splicing node 2 corresponds to the processing logic part for splicing the data tables for the time window 2, the calculating node 2 corresponds to the processing logic part for acquiring the features from the data tables for the time window 2 and a feature splicing node corresponds to the processing logic part for summarizing the features acquired based on the time window 1 and the features acquired based on the time window 2.

Referring back to the Fig. 1, in the step S30, the generated execution plan is executed by the local machine or the cluster based on the feature extraction scene. As an example, the feature extraction scene can be the online feature extraction scene or the offline feature extraction scene.

As an example, when the generated execution plan is the directed acyclic graph formed by the nodes, the processing logic corresponding to each node is implemented by the local machine or the cluster so as to execute the generated execution plan according to the connecting relationship among the nodes in the directed acyclic graph based on the feature extraction scene.

As an example, implementing the processing logic corresponding to the calculating node by the local machine or the cluster can include directly operating the calculating node by the local machine or the cluster. As another example, implementing the processing logic corresponding to the calculating node by the local machine or the cluster can include compiling the processing logic corresponding to the calculating node into at least one executable file by the local machine or the cluster and operating the at least one executable file. Preferably, corresponding optimization can be performed when the processing logic is compiled into the executable file.

As a preferred example, in the process of compiling the processing logic corresponding to the calculating node into the executable file, a common subexpression in the processing logic can be replaced with an intermediate variable. For example, when the processing logic corresponding to the calculating node includes f1=discrete(max(col1)) and f2=continous(max(col1)), the common subexpression max(col1) can be taken as the intermediate variable in the process of compiling the processing logic corresponding to the calculating node into the executable file, i.e., ordering a=max(col1), f1=discrete(a) and f2=continous(a), thus, it is necessary to calculate value of a once when the corresponding executable file is executed and f1 and f2 can reuse a calculating result of a. Reuse of the intermediate calculating result can be implemented by reusing the intermediate variable, so that the calculating amount of the feature extraction process can be reduced and the executing efficiency of the feature extraction process can be improved.

As a preferred example, in the process of compiling the processing logic corresponding to the calculating node into the executable file, part of processing logics that are closely related in operation and independent from other processing logics among the processing logics can be compiled into the same executable file. For example, the part of processing logics that are closely related in operation and independent from other processing logics among the processing logics can be part of processing logics that use the same common subexpression and are not associated with other processing logics in logic. Thus, the part of processing logics can share the intermediate variable, and moreover, as different executable files do not share the intermediate variable, the different executable files can be executed in parallel. Therefore, according to the method, a JIT (Just-In-Time, In-time compiling) of a compiler can be reused, so that the executing efficiency of the code in the compiled executable file is improved, and logic isolation can be prepared for parallel execution of the feature extraction process so as to execute the plurality of executable files in parallel.

As an example, for each calculating node, the processing logic corresponding to the calculating node is compiled into at least one executable file.

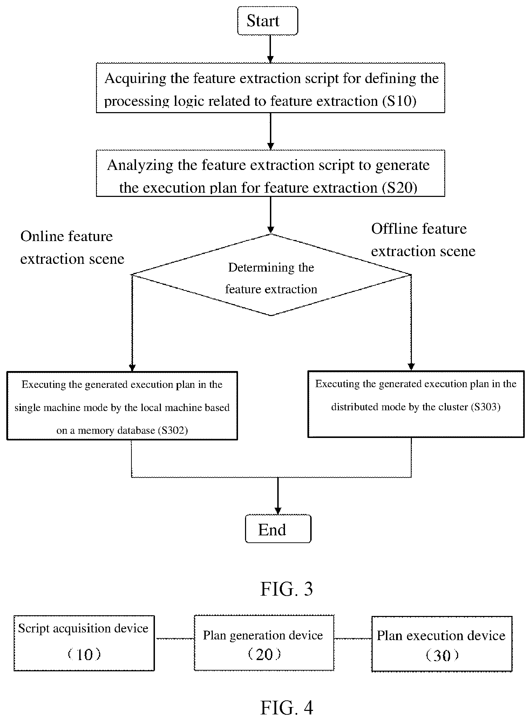

Fig. 3 illustrates a flow diagram of the method for uniform execution of feature extraction according to another exemplary embodiment of the disclosure. The S30 herein specifically comprises S301, S302 and S303. S10 and S20 can be implemented with reference to the embodiments described in the Fig. 1 and Fig. 2, and no more detailed description is made herein.

In the step S301, the feature extraction scene is determined.

As an example, the feature extraction scene specified by the user can be acquired. For example, the method can be executed by the machine learning platform for executing a machine learning process, and the machine learning platform can provide the graphical interface for specifying the feature extraction scene to the user so as to acquire the feature extraction scene specified by the user according to the input operation, executed by the graphical interface, of the user.

In the embodiment of the present invention, the feature extraction scene is determined automatically. For example, when the current machine learning scene is a machine learning scene in training a machine learning model, the feature extraction scene can be determined as the offline feature extraction scene automatically, and when the current machine learning scene is a machine learning scene in estimation by the trained machine learning model, the feature extraction scene can be determined as the online feature extraction scene automatically.

When the feature extraction scene determined in the step S301 is the online feature extraction scene, the generated execution plan is executed in a local machine in a single machine mode. As an example, the generated execution plan can be executed in the single machine mode by the local machine based on an internal memory database. For example, the processing logic for splicing the data tables and/or the processing logic for summarizing the features can be implemented by the internal memory database of the local machine.

When the feature extraction scene determined in the step S301 is the offline feature extraction scene, the generated execution plan is executed in a distributed mode by the cluster. In other words, the generated execution plan can be executed by a plurality of calculating devices in the cluster. It should be noted that the calculating devices described herein can indicate either physical entities or virtual entities, for example, the calculating devices can indicate actual calculating machines or logic entities deployed on the calculating machines.

As an example, the generated execution plan can be executed in the distributed mode by the cluster based on a parallel operational framework Spark. For example, the processing logics such as the processing logic for splicing the data tables and summarizing the features can be implemented by a bottom interface of the Spark. For example, the generated execution plan for feature extraction can be distributed to each calculating device in the cluster based on the Spark to enable each calculating device to execute the generated execution plan based on data stored therein and return the execution result. In addition, the generated execution plan further can be executed in the distributed mode by the cluster based on other parallel operational frameworks.

As an example, the S303 can include providing a list of candidate clusters to the user; and executing the generated execution plan in the distributed mode by the clusters selected by the user from the list.

The method for uniform execution of feature extraction according to the exemplary embodiment of the disclosure can be used for executing the uniform execution plan by the local machine or the cluster according to the feature extraction scene for the same feature extraction script. As an example, in the online feature extraction scene, the generated execution plan is executed by the local machine and in the offline feature extraction scene, the generated execution plan is executed by the cluster. On the one hand, the method can be compatible with the online feature extraction scene and the offline feature extraction scene to achieve seamless joint of the online feature extraction scene and the offline feature extraction scene, so that it is unnecessary to develop specific operating modes in the online feature extraction scene and the offline feature extraction scene separately for the same feature extraction script, and the workload of development staff is reduced; and on the other hand, the method can be used for feature extraction efficiently by way of a high throughput in the offline feature extraction scene, and moreover, the method and system can be used for feature extraction with high real-time and low time delay in the online feature extraction scene.

As an example, the S303 can include implementing the processing logic corresponding to the calculating node for feature extraction in the time window by executing the following operations in the distributed mode by the cluster: dividing data records with a same segmentation reference field value in the source data table of the time window into a same group (i.e., different groups correspond to different segmentation reference field values) and sequencing the data records in the same group according to an increasing sequence (i.e., the time-sequence corresponding to the time reference field values) of the time reference field values; and then performing feature extraction in the time window based on the sequenced data records in the same group, specifically, for the current data records, processing values of source fields on which each feature depends on to acquire each feature, wherein each data record in the time window is screened from corresponding group according to time span and/or window size.

As an example, the S302 can include implementing the processing logic corresponding to the calculating node for feature extraction in the time window by executing the following operations in the single machine mode by the local machine: for the current data records, processing values of source fields on which each feature depends on to acquire each feature by means of each data record in the corresponding time window, wherein each data record in the time window is screened from corresponding group according to time span and/or window size.

Fig. 4 illustrates a block diagram of the system for uniform execution of feature extraction according to the exemplary embodiment of the disclosure. As shown in the Fig. 4, the system for uniform execution of feature extraction according to the exemplary embodiment of the disclosure includes a script acquisition device 10, a plan generation device 20 and a plan execution device 30.

Specifically, the script acquisition device 10 is used for acquiring the feature extraction script for defining the processing logic related to feature extraction.

The processing logic related to feature extraction herein can include any processing logic related to feature extraction. As an example, the processing logic related to feature extraction can include processing logic that acquires features from a data table. The data table herein can be either an original data table or a data table acquired by processing the original data table (for example, splicing a plurality of original data tables).

As an example, when the data table is the data table that is acquired by splicing the plurality of original data tables, the processing logic related to feature extraction can further include processing logic for splicing the data tables. As a preferred example, the processing logic for splicing the data tables can include a processing logic for splicing the data tables for source fields of features. The processing logic for splicing the data tables for original fields of features herein is a processing logic for only splicing the source fields of features in the to-be-spliced data tables to form a new data table.

As an example, the processing logic related to feature extraction can relate to feature extraction in one or more time windows. The time windows herein can be used for screening one or more data records needed to depend when features are generated, wherein the time windows can be used for generating non-time-sequence features when being set to only include one data record and can be used for generating time-sequence features when being set to include more data records. It should be understood that the processing logic related to feature extraction can relate to extraction of one or more features in each time window. As an example, when the processing logic related to feature extraction relates to feature extraction in more time windows, the processing logic related to feature extraction can further include a processing logic for summarizing the features.

As an example, the time window is defined by at least one of a source data table, a segmentation reference field, a time reference field, a time span and a window size. Specifically, the source data table of the time window is the data table, wherein feature extraction is based on the data table in the time window. A segmentation reference field of the time window is a field (for example, a user ID), wherein the data records in the source data table are grouped (i.e., fragmented) based on the field. A time reference field of the time window is a field (for example, a user card-swiping time), wherein each group of the data records is sequenced based on the field. The time span of the time window is a time range (for example, a week) corresponding to the time reference field of the data record in the time window, the window size of the time window is quantity of data in the time window, and the window size is an integer that is greater than 0.It should be understood that either one of the time span and the window size or both the time span and the window size can be set in defining the time window.

As an example, when the processing logic related to feature extraction relates to feature extraction in more time windows, the more time windows are different one another, i.e., at least one of the following items among the more time windows is different: source data table, segmentation reference field, time reference field, time span and window size.

As an example, the processing logic related to feature extraction can relate to: non-time-sequence feature extraction in the time window with the window size being 1, and time-sequence feature extraction in the time window with the window size not being 1.

As an example, the script acquisition device 10 can be used for acquiring the feature extraction script for defining the processing logic related to feature extraction directly externally. As another example, the script acquisition device 10 can be used for acquiring the feature extraction script based on a code, for defining the processing logic related to feature extraction, input by a user through an input box and/or a configuration item, for defining the processing logic related to feature extraction, configured by a user.

The plan generation device 20 is used for analyzing the feature extraction script to generate the execution plan for feature extraction.

As an example, the plan generation device 20 can be used for segmenting a processing logic defined by the feature extraction script according to a processing sequence to generate the execution plan for feature extraction.

As an example, the plan generation device 20 can be used for segmenting corresponding processing logic according to the processing sequence to generate the execution plan for feature extraction for each time window when the processing logic relates to feature extraction in at least one time window.

As an example, the generated executing plan for feature extraction can be a directed acyclic graph constituted by nodes, wherein the nodes correspond to the segmented processing logics. As an example, the nodes include calculation nodes corresponding to the processing logics for acquiring features from the data tables. Further, the nodes can further include table splicing nodes corresponding to the processing logics for splicing the data tables, and/or feature splicing nodes corresponding to the processing logics for summarizing the features. As an example, the processing logics for acquiring the features from the data tables for different time windows can correspond to different calculation nodes, and the processing logics for splicing different data tables can correspond to different table splicing nodes. It should be understood that a connecting relationship with the nodes corresponding to each segmented processing logic part can be determined based on a relationship between an input variable and/or an output variable of each segmented processing logic part.

The plan execution device 30 is used for executing the generated execution plan by the local machine or the cluster based on the feature extraction scene. As an example, the feature extraction scene can be the online feature extraction scene or the offline feature extraction scene.

As an example, the plan execution device 30 can acquire the feature extraction scene specified by the user. For example, the system can be deployed on the machine learning platform for executing the machine learning process, and a display device can provide the graphical interface for specifying the feature extraction scene to the user, and the plan execution device 30 can acquire the feature extraction scene specified by the user according to the input operation, executed by the graphical interface, of the user.

The plan execution device 30 determines the feature extraction scene automatically. when the current machine learning scene is a machine learning scene in training a machine learning model, the plan execution device 30 determines the feature extraction scene as the offline feature extraction scene automatically, and when the current machine learning scene is a machine learning scene in estimation by the trained machine learning model, the plan execution device 30 determines the feature extraction scene as the online feature extraction scene automatically.

When the feature extraction scene is the online feature extraction scene, the plan execution device 30 executes the generated execution plan in the single machine mode by the local machine. As an example, the system can be deployed on the machine learning platform for executing the machine learning process, and the local machine is the current calculating device that uses the machine learning platform for feature extraction.

When the feature extraction scene is the offline feature extraction scene, the plan execution device 30 executes the generated execution plan in the distributed machine mode by the cluster.

As an example, the plan execution device 30 can execute the generated execution plan in the distributed mode by the cluster based on a parallel operational framework Spark.

As an example, when the execution plan is the directed acyclic graph formed by the nodes, the plan execution device 30 can implement the processing logic corresponding to each node by the local machine or the cluster so as to execute the generated execution plan based on the feature extraction scene.

As another example, the plan execution device 30 can compile the processing logic corresponding to the calculating node by the local machine or the cluster into at least one executable file by the local machine or the cluster and operate the at least one executable file. Preferably, the plan execution device 30 can perform corresponding optimization when compiling the executable file.

As an example, in the process of compiling the processing logic corresponding to the calculating node into the executable file, the plan execution device 30 can replace a common subexpression in the processing logic with an intermediate variable.

As an example, in the process of compiling the processing logic corresponding to the calculating node into the executable file, the plan execution device 30 can compile part of processing logics that are closely related in operation and independent from other processing logics among the processing logics into the same executable file.

As an example, the plan execution device 30 can provide a list of candidate clusters to the user when the feature extraction scene is the offline feature extraction scene and execute the generated execution plan in the distributed mode by means of clusters selected by the user from the list.

It should be understood that the embodiments of the system for uniform execution of feature extraction according to the exemplary embodiment of the disclosure can be implemented with reference to related embodiments described in Fig. 1 to Fig. 3, and no more detailed description is made herein.

The devices included by the system for uniform execution of feature extraction according to the exemplary embodiment of the disclosure can be separately configured to software, hardware, firmware for executing specific functions and any combination thereof. For example, these devices can be corresponding to either a special integrated circuit or a pure software cord and a module where software and hardware are combined. In addition, one or more functions implemented by these devices can be further executed by assemblies in physical entity equipment (for example, a processor, a client or a server and etc.) uniformly.

It should be understood that the method for uniform execution of feature extraction according to the exemplary embodiment of the disclosure can be implemented by a program recorded on the computer readable medium, for example, the computer readable medium for uniform execution of feature extraction can be provided according to the exemplary embodiment of the disclosure, wherein the computer program for executing the following methods is recorded on the computer readable medium: acquiring the feature extraction script for defining the processing logic related to feature extraction; analyzing the feature extraction script to generate the execution plan for feature extraction; and executing the generated execution plan by the local machine or the cluster based on the feature extraction scene.

The computer program in the computer readable medium can operate in an environment where computer equipment such as the client, a main frame, an agent device and the server are deployed. It should be noted that the computer program further can be used for executing additional steps besides the steps or executing more specific processing when executing the steps. These additional steps and further processed contents have been described with reference to Fig. 1 to Fig. 3. In order to avoid repetition, no more detailed description is made.

It should be noted that the method for uniform execution of feature extraction according to the exemplary embodiment of the disclosure can implement corresponding functions dependent on operation of the computer program completely, i.e., each device corresponds to each step in a functional architecture of the computer program, so that the whole system is transferred by a special software pack (for example, a lib) to implement the corresponding functions.

On the other hand, the devices included by the system for uniform execution of feature extraction according to the exemplary embodiment of the disclosure can be further implemented by means of hardware, software, firmware, middleware, a microcode or any combination thereof. When the method is implemented by means of hardware, software, firmware, middleware and the microcode, a program code or a code segment for executing a corresponding operation can be stored in the computer readable medium such as a storage medium, so that the processor can execute the corresponding operation by reading and operating the corresponding program code or code segment.

For example, the exemplary embodiment of the disclosure can be further implemented as the calculating device. The calculating device comprises a storage part and a processor. The storage part stores a computer executable command set. When the computer executable command set is executed by the processor, the method for executing feature extraction is executed uniformly.

Specifically, the calculating device can be either deployed in the server or the client or in a node device in a distributed network environment. In addition, the calculating device can be a PC, a tablet personal computer device, a personal digital assistant, a smart phone, a web application or other devices capable of executing the command set.

The calculating device herein is not necessarily a single calculating device and can be any aggregation of devices or circuits capable of executing the command (or command set) independently or jointly. The calculating device further can be a part of an integrated control system or a system manager or can be configured as portable electronic device interconnected locally or remotely (for example, through wireless transmission) by an interface.

In the calculating device, the processor can include a central processing unit (CPU), a graphics processing unit (GPU), a programmable logic device, a dedicated processor system, a micro controller or a microprocessor. By way of example, and not limitation, the processor further can include an analog processor, a digital processor, a microprocessor, a multicore processor, a processor array, a network processor and the like.

Some operations described in the method for uniform execution of feature extraction according to the exemplary embodiment of the disclosure can be implemented by way of software and some operation can be implemented by way of hardware. In addition, these operations can be further implemented by way of combining software with hardware.

The processor can operate the command or the code stored in one of storage parts, wherein the storage parts further can store data. Commands and data further can be sent and received by a network through a network interface device, wherein the network interface device can adopt any known transmission protocols.

The storage part can be integrated with the processor integrally, for example, an RAM or a flash memory is arranged in the microprocessor of the integrated circuit and the like. In addition, the storage part can include an independent device such as other storage devices capable of being used by an external drive, a storage array or any database system. The storage part and the processor can be coupled in operation or can intercommunicate through, for example, an I/O port, network connection and the like, so that the processor can read files stored in the storage part.

In addition, the calculating device further can include a video display (such as a liquid crystal display) and a user interaction interface (such as a keyboard, a mouse and a touch input device). All assemblies of the calculating device can be connected to each other via a bus and/or a network.

Operations involved in the method for uniform execution of feature extraction according to the exemplary embodiment of the disclosure can be described as various functional blocks or functional diagrams that are interconnected or coupled. However, these functional blocks or functional diagrams can be equably integrated as a single logic device or can be operated according to a unspecific boundary.

For example, as described above, the calculating device for uniform execution of feature extraction according to the exemplary embodiment of the disclosure can include the storage part and the processor, wherein the storage part stores a computer executable command set. When the computer executable command set is executed by the processor, The steps of acquiring the feature extraction script for defining the processing logic related to feature extraction; analyzing the feature extraction script to generate the execution plan for feature extraction; and executing the generated execution plan by the local machine or the cluster based on the feature extraction scene are executed.

Although exemplary embodiments of the disclosure are described above, it should be understood that the above description is intended to be exemplary only, rather than exhaustive; the present disclosure is not limited to the disclosed exemplary embodiments. Various modifications and variations will be apparent to those of ordinary skill in the art without departing from the scope of the disclosure. Therefore, the protection scope of the disclosure is subject to the protection scope of the accompanying claims.

## Claims

1. A method for uniform execution of feature extraction by at least one calculating device, comprising:
acquiring (S10) a feature extraction script for defining a processing logic related to feature extraction;
analyzing (S20) the feature extraction script to generate an execution plan for feature extraction; and
automatically determining a feature extraction scene, and executing (S30) the generated execution plan by a local machine or a cluster based on a feature extraction scene;
wherein the automatically determining a feature extraction scene comprises:
automatically determining the feature extraction scene as an offline feature extraction scene when a current machine learning scene is a machine learning scene in training a machine learning model; and
automatically determining the feature extraction scene as an online feature extraction scene when a current machine learning scene is a machine learning scene in estimation by a trained machine learning model; and
wherein the executing (S30) the generated execution plan by the local machine or the cluster based on the feature extraction scene comprises:
executing the generated execution plan in a single machine mode by the local machine when the feature extraction scene is an online feature extraction scene (S302); and
executing the generated execution plan in a distributed mode by the cluster when the feature extraction scene is an offline feature extraction scene (S303).

2. The method of claim 1, in that the step of analyzing the feature extraction script to generate the execution plan for feature extraction comprises:
segmenting a processing logic defined by the feature extraction script according to a processing sequence to generate the execution plan for feature extraction.

3. The method of claim 2, in that the processing logic relates to feature extraction in at least one time window, and
the step of segmenting the processing logic defined by the feature extraction script according to the processing sequence to generate the execution plan for feature extraction comprises: for each time window, segmenting a corresponding processing logic according to the processing sequence separately to generate the execution plan for feature extraction.

4. The method of claim 3, in that the execution plan is a directed acyclic graph constituted by nodes, and wherein the nodes correspond to the segmented processing logics, and
the step of executing the generated execution plan by the local machine or the cluster based on the feature extraction scene comprises: implementing the processing logic corresponding to each of the nodes by the local machine or the cluster so as to execute the generated execution plan based on the feature extraction scene.

5. The method of claim 4, in that the nodes comprise calculation nodes corresponding to the processing logics for acquiring features from a data table.

6. The method of claim 5, in that the nodes further comprise at least one of table splicing nodes corresponding to the processing logics for splicing the data table, and feature splicing nodes corresponding to the processing logics for summarizing the features.

7. The method of claim 5, in that implementing the processing logics corresponding to the calculation nodes by the local machine or the cluster comprises:
compiling the processing logics corresponding to the calculation nodes into at least one executable file by the local machine or the cluster and operating the at least one executable file, and
wherein implementing the processing logics corresponding to the calculation nodes by the local machine or the cluster comprises at least one of following two steps: replacing a common subexpression in the processing logics with an intermediate variable in the process of compiling the processing logics corresponding to the calculation nodes into the executable file; and compiling part of processing logics that are closely related in operation and independent from other processing logics among the processing logics into the same executable file.

8. The method of claim 3, in that the time window is defined by at least one of a source data table, a segmentation reference field, a time reference field, a time span and a window size, wherein the window size is quantity of data in the time window.

9. The method of any one of claims 1 to 8, in that the feature extraction scene is specified by a user or is determined automatically.

10. The method of any one of claims 1 to 9, in that the step of executing the generated execution plan in the distributed mode by the cluster when the feature extraction scene is the offline feature extraction scene comprises:
providing a list of candidate clusters to the user when the feature extraction scene is the offline feature extraction scene; and
executing the generated execution plan in the distributed mode by means of clusters selected by the user from the list.

11. The method of claim 6, in that the processing logics for splicing the data table comprise processing logics for splicing the data table for the source fields of features.

12. The method of claim 8, in that the processing logics relate to at least one of the following:
non-time-sequence feature extraction in the time window with the window size being being set to include only one data record,
and
time-sequence feature extraction in the time window with the window size being set to include mode data records.

13. A system for uniform execution of feature extraction, comprising:
a script acquisition device (10) for acquiring a feature extraction script for defining a processing logic related to feature extraction;
a plan generation device (20) for analyzing the feature extraction script to generate an execution plan for feature extraction; and
a plan execution device (30) for automatically determining a feature extraction scene and executing the generated execution plan by a local machine or a cluster based on a feature extraction scene,
wherein automatically determining a feature extraction scene comprises:
the plan execution device (30) automatically determining the feature extraction scene as an offline feature extraction scene when a current machine learning scene is a machine learning scene in training a machine learning model; and
the plan execution device (30) automatically determining the feature extraction scene as an online feature extraction scene when a current machine learning scene is a machine learning scene in estimation by a trained machine learning model; and
wherein executing the generated execution plan by the local machine or the cluster based on the feature extraction scene comprises:
the plan execution device (30) executing the generated execution plan in a single machine mode by the local machine when the feature extraction scene is an online feature extraction scene; and
the plan execution device (30) executing the generated execution plan in a distributed mode by the cluster when the feature extraction scene is an offline feature extraction scene.

14. A computer readable storage medium that stores a command, in that when the command is operated by the at least one calculating device, the at least one calculating device is enabled to execute the method of any one of claims 1-12 for uniform execution of feature extraction.

## Patentansprüche

1. Verfahren zur einheitlichen Merkmalsextraktion, die durch mindestens eine Computervorrichtung durchgeführt wird, umfassend:
Erhalten (S10) eines Merkmalsextraktionsskripts zum Definieren einer Verarbeitungslogik im Zusammenhang mit der Merkmalsextraktion;
Interpretieren (S20) des Merkmalsextraktionsskripts, um einen Ausführungsplan zur Merkmalsextraktion zu generieren; und
automatisches Bestimmen eines Merkmalsextraktionsszenarios und Ausführen (S30) des generierten Ausführungsplans basierend auf dem Merkmalsextraktionsszenario durch eine lokale Maschine oder einen Cluster;
wobei das automatische Bestimmen des Merkmalsextraktionsszenarios folgende Schritte umfasst:
wenn das aktuelle Maschinenlernszenario ein Maschinenlernszenario ist, bei dem ein Maschinenlernmodell trainiert wird, automatisches Festlegen des Merkmalsextraktionsszenarios als Offline-Merkmalsextraktionsszenario; und
wenn das aktuelle Maschinenlernszenario ein Maschinenlernszenario ist, bei dem ein trainiertes Maschinenlernmodell zur Schätzung verwendet wird, automatisches Festlegen des Merkmalsextraktionsszenarios als Online-Merkmalsextraktionsszenario; und
wobei das Ausführen (S30) des generierten Ausführungsplans basierend auf dem Merkmalsextraktionsszenario durch die lokale Maschine oder den Cluster folgende Schritte umfasst:
Ausführen (S302) des generierten Ausführungsplans durch die lokale Maschine in einem Standalone-Modus, wenn das Merkmalsextraktionsszenario als Online-Merkmalsextraktionsszenario festgelegt wird; und
Ausführen (S303) des generierten Ausführungsplans durch den Cluster in einem verteilten Modus, wenn das Merkmalsextraktionsszenario als Offline-Merkmalsextraktionsszenario festgelegt wird.

2. Verfahren nach Anspruch 1, wobei der Schritt des Interpretierens des Merkmalsextraktionsskripts, um den Ausführungsplan zur Merkmalsextraktion zu generieren, einen folgenden Schritt umfasst:
Aufteilen der mit dem Merkmalsextraktionsskript definierten Verarbeitungslogik entsprechend einer Verarbeitungsreihenfolge, um den Ausführungsplan zur Merkmalsextraktion zu generieren.

3. Verfahren nach Anspruch 2, wobei die Verarbeitungslogik eine Merkmalsextraktion in mindestens einem Zeitfenster betrifft, und
der Schritt des Aufteilens der mit dem Merkmalsextraktionsskript definierten Verarbeitungslogik entsprechend der Verarbeitungsreihenfolge, um den Ausführungsplan zur Merkmalsextraktion zu generieren, einen folgenden Schritt umfasst: für die einzelnen Zeitfenster, Aufteilen der entsprechenden Verarbeitungslogik entsprechend der Verarbeitungsreihenfolge, um den Ausführungsplan zur Merkmalsextraktion zu generieren.

4. Verfahren nach Anspruch 3, wobei der Ausführungsplan ein gerichteter azyklischer Graph ist, der aus Knoten besteht, wobei die Knoten den aufgeteilten Verarbeitungslogik entsprechen, und
der Schritt des Ausführens des generierten Ausführungsplans basierend auf dem Merkmalsextraktionsszenario durch die lokale Maschine oder den Cluster einen folgenden Schritt umfasst: basierend auf dem Merkmalsextraktionsszenario, Implementieren der den einzelnen Knoten entsprechenden Verarbeitungslogik durch die lokale Maschine oder den Cluster, um den generierten Ausführungsplan auszuführen.

5. Verfahren nach Anspruch 4, wobei die Knoten einen Computerknoten umfassen, der einer Verarbeitungslogik zum Erfassen von Merkmalen aus einer Datentabelle entspricht.

6. Verfahren nach Anspruch 5, wobei die Knoten weiterhin mindestens einen der folgenden Knoten umfassen: einen Tabellenverknüpfungsknoten, der einer Verarbeitungslogik zur Datentabellenverknüpfung entspricht, und einen Merkmalverknüpfungsknoten, der einer Verarbeitungslogik zur Merkmalzusammenfassung entspricht.

7. Verfahren nach Anspruch 5, wobei der Schritt des Implementierens der dem Computerknoten entsprechenden Verarbeitungslogik durch die lokale Maschine oder den Cluster einen folgenden Schritt umfasst:
Kompilieren der dem Computerknoten entsprechenden Verarbeitungslogik durch die lokale Maschine oder den Cluster in mindestens eine ausführbare Datei und Ausführen der mindestens eine ausführbare Datei, und
wobei der Schritt des Implementierens der dem Computerknoten entsprechenden Verarbeitungslogik durch die lokale Maschine oder den Cluster ferner mindestens einen der folgenden beiden Schritte umfasst: beim Kompilieren der dem Computerknoten entsprechenden Verarbeitungslogik in die ausführbare Datei, Ersetzen eines gemeinsamen Unterausdrucks in der Verarbeitungslogik durch eine Zwischenvariable; und Kompilieren von Teilen der Verarbeitungslogik, die eine enge operative Beziehung aufweisen und von anderen Teilen der Verarbeitungslogik unabhängig sind, in dieselbe ausführbare Datei.

8. Verfahren nach Anspruch 3, wobei das Zeitfenster durch mindestens eines der Folgenden definiert ist: eine Quelldatentabelle, ein Partitionierungsreferenzfeld, ein Zeitreferenzfeld, eine Zeitspanne und eine Fenstergröße, wobei die Fenstergröße die Datenmenge im Zeitfenster ist.

9. Verfahren nach einem der Ansprüche 1 bis 8, wobei das Merkmalsextraktionsszenario von einem Benutzer vorgegeben oder automatisch von einem System bestimmt wird.

10. Verfahren nach einem der Ansprüche 1 bis 9, wobei der Schritt des Ausführens des generierten Ausführungsplans durch den Cluster in einem verteilten Modus, wenn das Merkmalsextraktionsszenario als Offline-Merkmalsextraktionsszenario festgelegt wird, folgende Schritte umfasst:
Bereitstellen einer Liste von Cluster-Kandidaten für den Benutzer, wenn das Merkmalsextraktionsszenario als Offline-Merkmalsextraktionsszenario festgelegt wird; und
Ausführen des generierten Ausführungsplans durch den vom Benutzer aus der Liste ausgewählten Cluster im verteilten Modus.

11. Verfahren nach Anspruch 6, wobei die Verarbeitungslogik zur Datentabellenverknüpfung eine Verarbeitungslogik zur Datentabellenverknüpfung an einem Quellfeld eines Merkmals umfasst.

12. Verfahren nach Anspruch 8, wobei die Verarbeitungslogik mindestens eines der Folgenden betrifft:
eine nicht-zeitliche Merkmalsextraktion, die in einem Zeitfenster durchgeführt wird, bei dem die Fenstergröße so eingestellt ist, dass sie nur einen Datensatz enthält, und
eine zeitliche Merkmalsextraktion, die in einem Zeitfenster durchgeführt wird, bei dem die Fenstergröße so eingestellt ist, dass sie eine Vielzahl von Datensätzen enthält.

13. System zur einheitlichen Merkmalsextraktion, umfassend:
eine Skripterfassungsvorrichtung (10), die ein Merkmalsextraktionsskript zum Definieren einer Verarbeitungslogik im Zusammenhang mit der Merkmalsextraktion erfasst;
eine Plangenerierungsvorrichtung (20), die das Merkmalsextraktionsskript interpretiert, um einen Ausführungsplan zur Merkmalsextraktion zu generieren; und
eine Planausführungsvorrichtung (30), die ein Merkmalsextraktionsszenario automatisch bestimmt und den generierten Ausführungsplan basierend auf dem Merkmalsextraktionsszenario durch eine lokale Maschine oder einen Cluster ausführt,
wobei das automatische Bestimmen des Merkmalsextraktionsszenarios folgende Schritte umfasst:
wenn das aktuelle Maschinenlernszenario ein Maschinenlernszenario ist, bei dem ein Maschinenlernmodell trainiert wird, automatisches Festlegen des Merkmalsextraktionsszenarios als Offline-Merkmalsextraktionsszenario von der Planausführungsvorrichtung (30); und
wenn das aktuelle Maschinenlernszenario ein Maschinenlernszenario ist, bei dem ein trainiertes Maschinenlernmodell zur Schätzung verwendet wird, automatisches Festlegen des Merkmalsextraktionsszenarios als Online-Merkmalsextraktionsszenario von der Planausführungsvorrichtung (30); und
wobei das Ausführen des generierten Ausführungsplans basierend auf dem Merkmalsextraktionsszenario durch die lokale Maschine oder den Cluster folgende Schritte umfasst:
Ausführen des generierten Ausführungsplans von der Planausführungsvorrichtung (30) durch die lokale Maschine in einem Standalone-Modus, wenn das Merkmalsextraktionsszenario als Online-Merkmalsextraktionsszenario festgelegt wird; und
Ausführen des generierten Ausführungsplans von der Planausführungsvorrichtung (30) durch den Cluster in einem verteilten Modus, wenn das Merkmalsextraktionsszenario als Offline-Merkmalsextraktionsszenario festgelegt wird.

14. Computerlesbares Speichermedium, das Anweisungen speichert, wobei, wenn die Anweisungen von der mindestens einen Computervorrichtung ausgeführt werden, die mindestens eine Computervorrichtung dazu veranlasst wird, das Verfahren zur einheitlichen Merkmalsextraktion nach einem der Ansprüche 1 bis 12 auszuführen.

## Revendications

1. Un procédé d'exécution uniforme de l'extraction de caractéristiques par au moins un dispositif de calcul, comprenant les étapes suivantes :
obtenir (S10) un script d'extraction de caractéristiques définissant une logique de traitement relative à l'extraction de caractéristiques ;
analyser (S20) ledit script d'extraction de caractéristiques pour générer un plan d'exécution dédié à l'extraction de caractéristiques ; et
déterminer automatiquement un scénario d'extraction de caractéristiques, et exécuter (S30) le plan d'exécution généré par une machine locale ou un cluster en fonction de ce scénario ;
dans lequel la détermination automatique d'un scénario d'extraction de caractéristiques comprend :
lorsque le scénario d'apprentissage automatique actuel est celui de l'entraînement d'un modèle d'apprentissage automatique, le scénario d'extraction de caractéristiques est automatiquement déterminé comme un scénario d'extraction hors ligne ; et
lorsque le scénario d'apprentissage automatique actuel est celui de l'estimation au moyen d'un modèle d'apprentissage automatique entraîné, le scénario d'extraction de caractéristiques est automatiquement déterminé comme un scénario d'extraction en ligne ; et
dans lequel l'exécution (S30) du plan d'exécution généré par la machine locale ou le cluster en fonction du scénario d'extraction de caractéristiques comprend :
- lorsque le scénario est un scénario d'extraction en ligne (S302), exécuter le plan d'exécution généré en mode monomachine par la machine locale; et
- lorsque le scénario est un scénario d'extraction hors ligne (S303), exécuter le plan d'exécution généré en mode distribué par le cluster.

2. Le procédé selon la revendication 1, **caractérisé en ce que** l'étape d'analyse dudit script d'extraction de caractéristiques pour générer le plan d'exécution dédié à l'extraction de caractéristiques comprend :
diviser une logique de traitement définie par le script d'extraction de caractéristiques selon un ordre de traitement pour générer le plan d'exécution pour l'extraction de caractéristiques.

3. Le procédé selon la revendication 2, **caractérisé en ce que** ladite logique de traitement concerne l'extraction de caractéristiques dans au moins une fenêtre temporelle, et
l'étape de division de la logique de traitement définie par le script d'extraction de caractéristiques selon l'ordre de traitement pour générer le plan d'exécution comprend : pour chaque fenêtre temporelle, diviser respectivement une logique de traitement correspondante selon l'ordre de traitement, en vue de générer le plan d'exécution pour l'extraction de caractéristiques.

4. Le procédé selon la revendication 3, **caractérisé en ce que** ledit plan d'exécution se présente sous la forme d'un graphe acyclique dirigé composé de nœuds, dans lequel ces nœuds correspondent aux logiques de traitement divisées, et
l'étape d'exécution du plan d'exécution généré par une machine locale ou un cluster en fonction du scénario d'extraction de caractéristiques consiste à : mettre en œuvre, par la machine locale ou le cluster, la logique de traitement correspondant à chaque nœud en fonction du scénario d'extraction de caractéristiques, afin d'exécuter le plan d'exécution généré.

5. Le procédé selon la revendication 4, **caractérisé en ce que** lesdits nœuds incluent des nœuds de calcul correspondant à la logique de traitement pour obtenir des caractéristiques à partir d'une table de données.

6. Le procédé selon la revendication 5, **caractérisé en ce que** lesdits nœuds incluent en outre au moins l'un des éléments suivants : des nœuds de concaténation de tables correspondant à la logique de traitement dédiée à la concaténation de tables de données, et des nœuds de concaténation de caractéristiques correspondant à la logique de traitement servant à résumer les caractéristiques.

7. Le procédé selon la revendication 5, **caractérisé en ce que** l'étape de mise en œuvre, par la machine locale ou le cluster, de la logique de traitement correspondant aux nœuds de calcul comprend :
compiler, par la machine locale ou le cluster, la logique de traitement des nœuds de calcul en au moins un fichier exécutable, et exécuter ce au moins un fichier exécutable; et
dans lequel l'étape de mise en œuvre, par la machine locale ou le cluster, de la logique de traitement correspondant aux nœuds de calcul comprend en outre au moins l'une des deux étapes suivantes :
- remplacer le sous-expressions commune de ladite logique de traitement par une variable intermédiaire lors de la compilation de la logique de traitement des nœuds de calcul en un fichier exécutable; et
- compiler les parties de ladite logique de traitement qui présentent des liens opérationnels étroits et sont indépendantes des autres logiques de traitement dans un même fichier exécutable.

8. Le procédé selon la revendication 3, **caractérisé en ce que** ladite fenêtre temporelle est définie par au moins l'un des éléments suivants : une table de données source, un champ de référence de division, un champ de référence temporelle, une durée temporelle et une taille de fenêtre , dans laquelle la taille de fenêtre correspond au nombre de données dans la fenêtre temporelle.

9. Le procédé selon l'une quelconque des revendications 1 à 8, **caractérisé en ce que** ledit scénario d'extraction de caractéristiques est spécifié par l'utilisateur ou déterminé automatiquement par le système.

10. Le procédé selon l'une quelconque des revendications 1 à 9, **caractérisé en ce que** lorsque le scénario d'extraction est hors ligne, l'étape d'exécution du plan d'exécution généré en mode distribué par le cluster comprend :
fournir à l'utilisateur une liste de clusters candidats, lorsque le scénario d'extraction est hors ligne ; et
exécuter le plan d'exécution généré en mode distribué au moyen du cluster sélectionné par l'utilisateur dans la liste.

11. Le procédé selon la revendication 6, **caractérisé en ce que** la logique de traitement dédiée à la concaténation de tables de données comprend la logique de traitement permettant de concaténer des tables de données pour les champs sources des caractéristiques.

12. Le procédé selon la revendication 8, **caractérisé en ce que** ladite logique de traitement concerne au moins l'une des opérations suivantes :
l'extraction de caractéristiques non temporelles dans une fenêtre temporelle dont la taille est réglée pour ne contenir qu'un seul enregistrement de données ;
l'extraction de caractéristiques temporelles dans une fenêtre temporelle dont la taille est réglée pour contenir plusieurs enregistrements de données.

13. Un système d'exécution uniforme de l'extraction de caractéristiques, **caractérisé en ce qu'**il comprend :
un dispositif d'acquisition de scripts (10), chargé d'obtenir un script d'extraction de caractéristiques définissant une logique de traitement relative à l'extraction de caractéristiques ;
un dispositif de génération de plans (20), chargé d'analyser ledit script d'extraction de caractéristiques pour générer un plan d'exécution dédié à l'extraction de caractéristiques ; et
un dispositif d'exécution de plans (30), chargé de déterminer automatiquement un scénario d'extraction de caractéristiques et d'exécuter le plan d'exécution généré par une machine locale ou un cluster en fonction de ce scénario d'extraction de caractéristiques ;
la détermination automatique du scénario d'extraction de caractéristiques comprend :
- lorsque un scénario d'apprentissage automatique actuel est celui de l'entraînement d'un modèle d'apprentissage automatique, le scénario d'extraction de caractéristiques est automatiquement déterminé comme étant un scénario d'extraction hors ligne par le dispositif d'exécution de plans (30);
- lorsque un scénario d'apprentissage automatique actuel est celui de l'estimation au moyen d'un modèle d'apprentissage automatique entraîné, le scénario d'extraction de caractéristiques est automatiquement déterminé comme étant un scénario d'extraction en ligne par le dispositif d'exécution de plans (30);
dans lequel l'exécution du plan d'exécution généré par la machine locale ou le cluster en fonction du scénario d'extraction de caractéristiques comprend:
- lorsque le scénario est un scénario d'extraction en ligne, exécuter le plan d'exécution généré en mode monomachine par la machine locale par le dispositif d'exécution de plans (30) ; et
- lorsque le scénario est un scénario d'extraction hors ligne, exécuter le plan d'exécution généré en mode distribué par le cluster par le dispositif d'exécution de plans (30).

14. Un support de stockage lisible par ordinateur contenant des instructions, **caractérisé en ce que**, lorsque lesdites instructions sont exécutées par ledit au moins un dispositif de calcul, ledit au moins un dispositif de calcul est amené à exécuter un procédé d'exécution uniforme de l'extraction de caractéristiques selon l'une quelconque des revendications 1 à 12.
